# EUROPÄISCHE PATENTSCHRIFT

(11) **EP 4 533 986 B1**
(45) Veröffentlichungstag und Bekanntmachung des Hinweises auf die Patenterteilung: **17.06.2026**
(21) Anmeldenummer: 25153121.6
(22) Anmeldetag: 09.11.2022
(51) Int. Cl.: A47J 36/32, A47J 45/06

(54) **VERFAHREN ZUM BETRIEB EINES AUFSTELLGERÄTS MIT EINEM GRIFF FÜR EIN KOCHFELD**
METHOD OF OPERATING DEVICE WITH A HANDLE FOR A COOOKING HOB.
PROCÉDÉ DE FONCTIONNEMENT D'UN APPAREIL AUTONOME POUR PLAQUE DE CUISSON COMPRENANT UNE POIGNÉE

(30) Priorität: 30.11.2021 DE 102021131336
(43) Veröffentlichungstag der Anmeldung: 09.04.2025
(62) Teilanmeldung aus: 22814387.1
(73) Patentinhaber: Miele & Cie. KG, 33332 Gütersloh (DE)
(72) Erfinder: Enslin, Andreas, 33334 Gütersloh (DE)

(56) Entgegenhaltungen:
- EP-A1- 3 893 603
- WO-A1-2020/153826
- CN-A- 105 747 836
- DE-A1- 102019 126 830

## Beschreibung

Verfahren zum Betrieb eines Aufstellgeräts Die Erfindung betrifft ein Verfahren zum Betrieb eines Aufstellgeräts für ein Kochfeld gemäß Anspruch 1.

Derartig Verfahren zum Betrieb eines Aufstellgeräts sind in einer Vielzahl von Ausführungsformen bereits vorbekannt, beispielsweise aus der Druckschrift EP 3 893 603 A1.

Derartige Aufstellgeräte umfassen beispielsweise mindestens einen Griff mit einem Greifabschnitt mit mindestens einem in dem Griff integrierten Greifbereich zum Ergreifen des Aufstellgeräts mit einer Hand eines Benutzers, eine Steuerung, und eine mit der Steuerung signalübertragend verbundene Sendeeinheit zur Signalübertragung von dem Aufstellgerät zu dem Kochfeld, wobei der Greifbereich mindestens einen mit der Steuerung signalübertragend verbundenen Berührungssensor zur Detektion des Ergreifens des Griffs aufweist.

Gattungsgemäß sind beispielsweise die Druckschriften CN 105 747 836 A und DE 10 2019 126 830 A1.

Ferner ist aus der DE 10 2018 110 125 A1 ein Zubereitungsgerät für Nahrung und/oder Flüssigkeit auf einem Kochfeld oder in einem Garraum mit mindestens einer Waage zum Abwiegen von in das Zubereitungsgerät eingefüllter Nahrung und/oder Flüssigkeit und mit mindestens einem Griff zur Handhabung des Zubereitungsgeräts bekannt. Zur Verbesserung der Funktionalität des Zubereitungsgeräts ist die mindestens eine Waage in dem mindestens einen Griff des Zubereitungsgeräts angeordnet.

Weiterhin zeigt die Druckschrift WO 2020 153 826 A1 ein Garbehälter mit einem Griff, wobei in dem Griff ein Bedienelement integriert ist.

Der Erfindung stellt sich somit das Problem, ein Verfahren zum Betrieb eines auf einem Kochfeld aufstellbaren Aufstellgeräts zu verbessern. Erfindungsgemäß wird dieses Problem durch ein Verfahren zum Betrieb eines auf einem Kochfeld aufstellbaren Aufstellgeräts mit den Merkmalen des Patentanspruchs 1 gelöst. Vorteilhafte Ausgestaltungen und Weiterbildungen der Erfindung ergeben sich aus den abhängigen Ansprüchen.

Der mit der Erfindung erreichbare Vorteil besteht insbesondere darin, dass ein Verfahren zum Betrieb eines Aufstellgeräts verbessert sind. Aufgrund der erfindungsgemäßen Ausbildung des Verfahrens zum Betrieb eines derartigen Aufstellgeräts ist zum einen eine kostengünstige Benutzererkennung eines das Aufstellgerät benutzenden Benutzers ermöglicht. Zum anderen ist durch das Vorsehen des mindestens einen Berührungssensors in dem Greifabschnitt zur Detektion einer Berührung des Griffs durch den Benutzer zwecks manueller Bewegung des Aufstellgeräts eine Greifabsicht des Benutzers des Aufstellgeräts automatisch erkennbar. Ferner kann mittels der Erfindung ein Füllgrad des Aufstellgeräts, also ein Füllgewicht eines in das Aufstellgerät eingefüllten Garguts und/oder einer in das Aufstellgerät eingefüllten Flüssigkeit ohne viel Aufwand abgeschätzt werden. Darüber hinaus ist es mittels der Erfindung möglich, ein Verhalten des Benutzers bei der Benutzung des Aufstellgeräts zu ermitteln, so dass beispielsweise eine Interaktion des Benutzers mit dem Aufstellgerät ohne zusätzliche Mittel bestimmbar ist. Auch kann hierdurch die Sicherheit bei der Benutzung des Aufstellgeräts und/oder des Kochfelds wesentlich verbessert werden, ohne dass dadurch der Bedienkomfort für den Benutzer des Aufstellgeräts vermindert ist. Beispielsweise könnten Benutzerprofile für einzelne Benutzer in der Steuerung des Aufstellgeräts hinterlegt sein, so dass bestimmte Benutzer oder Benutzergruppen, wie in ihren Fähigkeiten eingeschränkte Benutzer und/oder Kinder, das Aufstellgerät und/oder das Kochfeld lediglich in vorher festgelegten Grenzen nutzen können. Hierbei kann auch die Technik der sogenannten Künstlichen Intelligenz zum Einsatz kommen.

Das Aufstellgerät ist nach Art, Funktionsweise, Dimensionierung und Material in weiten geeigneten Grenzen frei wählbar. Das Aufstellgerät kann beispielsweise als eine Pfanne oder ein Topf ausgebildet sein. Jedoch sind auch andere Ausführungsformen wie Wasserkocher, Bräter oder dergleichen denkbar. Entsprechend der Ausführungsform des Aufstellgeräts kann das Aufstellgerät über einen Griff oder mehrere Griffe verfügen, wobei die erfindungsgemäße Ausbildung des Griffs bei lediglich einem der Griffe oder einer Mehrzahl der Griffe vorliegen kann. Der mindestens eine Greifabschnitt mit dem Greifbereich ist dabei mittels des mindestens einen Berührungssensors als ein berührungsempfindlicher Bereich des Griffs ausgebildet. In anderen Ausführungsformen kann der mindestens eine Greifbereich zusätzlich auch als ein näherungssensitiver Bereich ausgebildet sein. Der mindestens eine Greifbereich kann dabei von außen sichtbar oder unsichtbar an dem Griff angeordnet sein. Beispielsweise kann der mindestens eine Greifbereich in den Griff vollständig integriert sein, so dass dieser Greifbereich von außen weder sichtbar noch fühlbar ist. Das Aufstellgerät kann für ein induktives Kochfeld geeignet ausgebildet sein. Dies ist jedoch nicht zwingend erforderlich. Das erfindungsgemäße Aufstellgerät kann für alle denkbaren Kochfeldtypen geeignet ausgebildet sein.

Grundsätzlich ist die weitere Verarbeitung der Detektion einer Berührung des Griffs durch den Benutzer, also das Verfahren zur Verarbeitung der Detektion einer Berührung des Griffs durch den Benutzer, in weiten geeigneten Grenzen frei wählbar. Entsprechendes gilt für die diesbezügliche Ausbildung des erfindungsgemäßen Aufstellgeräts.

Eine besonders vorteilhafte Weiterbildung des erfindungsgemäßen Verfahrens sieht vor, dass der Berührungssensor derart an dem Griff angeordnet oder in den Griff integriert ist, dass der Berührungssensor bei dem Ergreifen des Griffs mit der Hand mittels des mindestens einen Fingers funktionssicher berührbar ist. Auf diese Weise ist sichergestellt, dass das Ergreifen des Griffs, also das Greifen durch den Benutzer, funktionssicher detektiert wird.

Eine weitere vorteilhafte Weiterbildung des erfindungsgemäßen Verfahrens sieht vor, dass der mindestens eine Berührungssensor mindestens als ein erster Berührungssensor und ein zweiter Berührungssensor ausgebildet ist, wobei bei auf dem Kochfeld aufgestellten Aufstellgerät der erste Berührungssensor auf der dem Kochfeld zugewandten Seite des Griffs und der zweite Berührungssensor auf der dem Kochfeld abgewandten Seite des Griffs angeordnet ist. Hierdurch ist die Handhabung des Aufstellgeräts weiter vereinfacht, ohne, dass dadurch die Funktionssicherheit bei der Detektion des Ergreifens mittels des mindestens einen Berührungssensors beeinträchtigt ist. Entsprechend ist die Ergonomie bei der Benutzung des erfindungsgemäßen Aufstellgeräts weiter verbessert.

Eine andere vorteilhafte Weiterbildung des erfindungsgemäßen Verfahrens sieht vor, dass der Berührungssensor als eine berührungssensitive Folie ausgebildet ist. Folien sind besonders einfach an einem Griff für ein Aufstellgerät applizierbar. Beispielsweise lassen sich berührungssensitive Folien sehr leicht formschlüssig und dicht an dem Griff anordnen, so dass die Funktionalität des Berührungssensors durch beim Kochen oder Garen auftretende Umgebungsbedingungen nicht beeinträchtigt wird.

Ein Aspekt ist es den Berührungssensor oder einen berührungssensitiven Bereich als eine Glasabdeckung auszuführen. Vorzugsweise ist der Berührungssensor unterhalb der Glasabdeckung angeordnet und die Glasabdeckung bildet einen Abschnitt der Äußeren Oberfläche des Aufstellgeräts.

Eine weitere vorteilhafte Weiterbildung des erfindungsgemäßen Verfahrens sieht vor, dass das Aufstellgerät mindestens eine mit der Steuerung signalübertragend verbundene Eingabeeinheit mit mindestens einem in dem Griff integrierten Eingabebereich zur Eingabe eines Benutzerbefehls durch den Benutzer des Aufstellgeräts aufweist, wobei der Eingabebereich in einem von dem Greifabschnitt positionsverschiedenen Eingabeabschnitt angeordnet ist und mittels des Benutzerbefehls das Aufstellgerät und/oder das Kochfeld ansteuerbar sind/ist. Auf diese Weise ist beispielsweise die Sicherheit bei der Bedienung des

Aufstellgeräts und insbesondere die Sicherheit bei der Bedienung des Kochfelds wesentlich verbessert, ohne dass dadurch der Bedienkomfort für den Benutzer des Aufstellgeräts vermindert ist. Zum einen ist durch die klare räumliche Trennung des Griffs in einen Greifabschnitt und in den mindestens einen Eingabeabschnitt eine ungewollte Bedienung des mindestens einen Eingabebereichs der mindestens einen Eingabeeinheit bei einem Greifen des Griffs zur manuellen Bewegung des Aufstellgeräts wirksam entgegengewirkt. Bei dem erfindungsgemäßen Aufstellgerät ist somit eine Unterscheidung zwischen einer Bedienung des Griffs zum Zwecke der Eingabe eines Benutzerbefehls auf der einen Seite und einer Bedienung des Griffs zum Zwecke der manuellen Bewegung des Aufstellgeräts auf der anderen Seite ermöglicht.

Eine vorteilhafte Weiterbildung der vorgenannten Ausführungsform des erfindungsgemäßen Verfahrens sieht vor, dass in Abhängigkeit der Detektion des Ergreifens durch den Berührungssensor die Eingabe des Benutzerbefehls mittels der Steuerung sperrbar ist. Auf diese Weise ist der Schutz gegen eine Fehlbedienung des Aufstellgeräts weiter verbessert. Der Berührungssensor kann beispielsweise als ein kapazitiver Sensor ausgebildet sein.

Eine andere vorteilhafte Weiterbildung des erfindungsgemäßen Verfahrens sieht vor, dass in Abhängigkeit der mittels des Berührungssensors detektierten Berührung des Griffs die Steuerung des Aufstellgeräts und/oder eine Kochfeldsteuerung des Kochfelds von einem Standby-Modus in einen Bereitschaftsmodus oder einen Betriebsmodus überführbar ist, wobei die Steuerung und/oder Kochfeldsteuerung in dem Standby-Modus im Wesentlichen lediglich zur Überführung in den Bereitschaftsmodus oder den Betriebsmodus, in dem Bereitschaftsmodus zur Durchführung einer Zuordnung des Aufstellgeräts zu einer Kochstelle des Kochfelds und in dem Betriebsmodus für den Betrieb des Aufstellgeräts und/oder des Kochfelds in vollem Funktionsumfang ausgebildet sind/ist. Hierdurch ist zum einen ein energiesparender Betrieb des Aufstellgeräts und/oder des Kochfelds ermöglicht. Zum anderen ist damit der Bedienkomfort bei gleichzeitig gewährleisteter Sicherheit bei der Bedienung des Aufstellgeräts und des Kochfelds weiter gesteigert.

Eine weitere vorteilhafte Weiterbildung des erfindungsgemäßen Aufstellgeräts sieht vor, dass der Berührungssensor gleichzeitig als ein weiterer Eingabebereich zur Eingabe eines weiteren Benutzerbefehls zur Ansteuerung des Aufstellgeräts und/oder des Kochfelds ausgebildet ist, bevorzugt, dass das Aufstellgerät und/oder das Kochfeld in Abhängigkeit der Detektion der Berührung des Griffs mittels der Steuerung einschaltbar sind/ist. Auf diese Weise ist es möglich, den mindestens einen Berührungssensor gleichzeitig für eine intuitive Eingabe eines weiteren Benutzerbefehls durch den Benutzer zu verwenden. Somit ist die Funktionalität des mindestens einen Berührungssensors erhöht. Diese Eingabe eines weiteren Benutzerbefehls kann dabei zusätzlich zu oder alternativ zu der Eingabe eines Benutzerbefehls mittels des vorgenannten mindestens einen Eingabebereichs erfolgen.

Wie oben bereits ausgeführt, ist das erfindungsgemäße Verfahren in weiten geeigneten Grenzen frei wählbar.

Entsprechend der obigen Ausführungen sieht eine vorteilhafte Weiterbildung des erfindungsgemäßen Verfahrens vor, dass ein das Aufstellgerät handhabendes Individuum und/oder ein das Aufstellgerät handhabendes Mitglied einer Personengruppe erkannt wird, und/oder der mindestens eine Berührungssensor gleichzeitig als ein weiterer Eingabebereich zur Eingabe eines weiteren Benutzerbefehls zur Ansteuerung des Aufstellgeräts und/oder des Kochfelds verwendet wird, bevorzugt, dass eine Handhabungs-Interaktion des Benutzers mit dem Aufstellgerät erkannt wird und/oder eine Kochfeldaktion gestartet und/oder eingestellt und/oder beendet wird.

Zwei Ausführungsbeispiele der Erfindung sind in den Zeichnungen rein schematisch dargestellt und werden nachfolgend näher beschrieben. Es zeigt
- Figur 1: ein erstes Ausführungsbeispiel des Aufstellgeräts für ein Kochfeld zur Durchführung des erfindungsgemäßen Verfahrens in einer perspektivischen Darstellung,
- Figur 2: das erste Ausführungsbeispiel in einer teilweisen Seitenansicht und
- Figur 3: ein zweites Ausführungsbeispiel des Aufstellgeräts für ein Kochfeld zur Durchführung des erfindungsgemäßen Verfahrens in einer perspektivischen Darstellung.

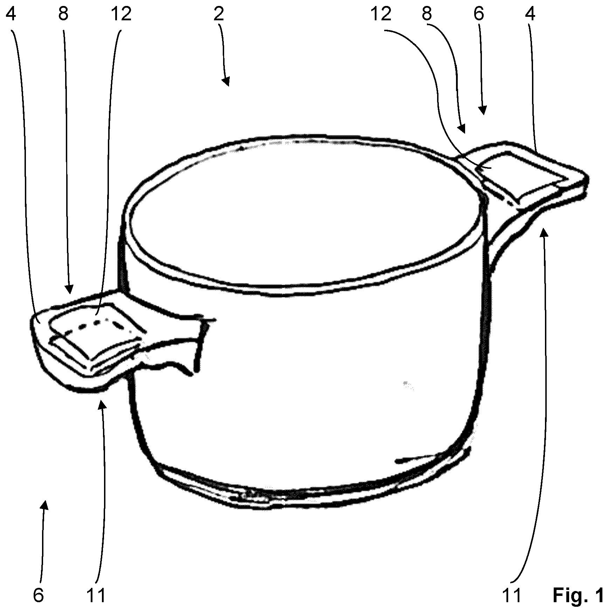

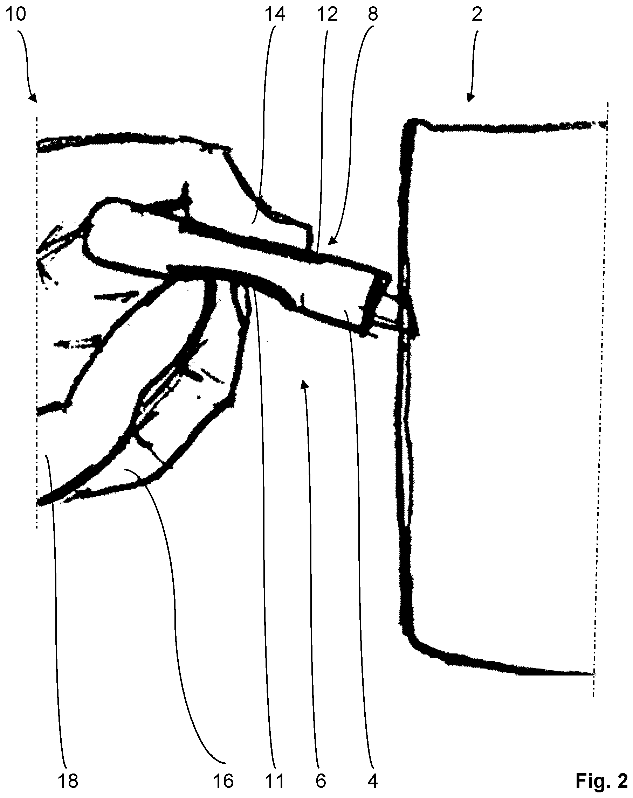

In den Fig. 1 und 2 ist ein erstes Ausführungsbeispiel des Aufstellgeräts für ein Kochfeld zur Durchführung des erfindungsgemäßen Verfahrens rein exemplarisch dargestellt.

Das Aufstellgerät 2 ist hier als ein Kochtopf zum Aufstellen auf ein nicht dargestelltes Kochfeld ausgebildet und umfasst zwei Griffe 4 mit jeweils einem Greifabschnitt 6 mit jeweils einem in dem Griff 4 integrierten Greifbereich 8 zum Ergreifen des Aufstellgeräts 2 mit einer Hand 10 eines nicht näher dargestellten Benutzers, eine nicht dargestellte Steuerung und eine mit der Steuerung signalübertragend verbundene, ebenfalls nicht dargestellte Sendeeinheit zur Signalübertragung von dem Aufstellgerät 2 zu dem Kochfeld, wobei der Greifbereich 8 zwei mit der Steuerung signalübertragend verbundene Berührungssensoren, nämlich einen bei auf dem Kochfeld aufgestellten Aufstellgerät 2 dem Kochfeld zugewandten ersten Berührungssensor 11 und einen bei auf dem Kochfeld aufgestellten Aufstellgerät 2 dem Kochfeld abgewandten zweiten Berührungssensor 12, zur Detektion des Ergreifens des Griffs 4 aufweist.

Der erste und der zweite Berührungssensor 11, 12 sind jeweils zur im Wesentlichen gleichzeitigen Detektion einer Kraft und einer Position mindestens eines Fingers, beispielsweise des Daumens 14, des Zeigefingers 16 und des Mittelfingers 18 der linken Hand 10 ausgebildet, wobei in Abhängigkeit von Ausgangssignalen der Berührungssensoren 11, 12 die mit der Steuerung signalübertragend verbundene, nicht dargestellte Sendeeinheit zur Ansteuerung des Kochfelds ansteuerbar ist. Siehe hierzu die Fig. 2, in der der in der Bildebene der Fig. 1 links dargestellte Griff 4 und die linke Hand 10 des Benutzers jeweils teilweise dargestellt sind. Alternativ oder zusätzlich hierzu ist es bei anderen Ausführungsformen denkbar, dass eine Ausgabeeinheit des Aufstellgeräts zur Ausgabe von akustischen und/oder visuellen Informationen an den Benutzer des Aufstellgeräts, analog zu der vorgenannten Sendeeinheit des vorliegenden Ausführungsbeispiels, mittels der Ausgangssignale des mindestens einen Berührungssensors ansteuerbar ist.

Wie aus den Fig. 1 und 2 hervorgeht, sind die Berührungssensoren 11, 12 derart in dem jeweiligen Griff 4 integriert, dass der jeweilige Berührungssensor 11, 12 bei dem Ergreifen des korrespondierenden Griffs 4 mit der Hand 10 mittels des mindestens einen Fingers 14, 16, 18 funktionssicher berührbar ist. Die beiden Griffe 4 sind bei dem vorliegenden Ausführungsbeispiel zueinander identisch ausgebildet, so dass Ausführungen zu dem in der Bildebene der Fig. 1 links dargestellten Griff 4 gleichfalls für den in der Bildebene der Fig. 1 rechts dargestellten Griff 4 gelten. Zur leichteren Integration der Berührungssensoren 11, 12 sind diese jeweils als eine berührungssensitive Folie ausgebildet.

Das Aufstellgerät 2 gemäß dem vorliegenden Ausführungsbeispiel ist ferner derart ausgebildet und eingerichtet, dass die Steuerung und eine nicht dargestellte Kochfeldsteuerung des ebenfalls nicht dargestellten Kochfelds in Abhängigkeit der mittels der Berührungssensoren 11, 12 detektierten Berührung des jeweiligen Griffs 4 von einem Standby-Modus in einen Bereitschaftsmodus oder einen Betriebsmodus überführbar sind, wobei die Steuerung und/oder die Kochfeldsteuerung in dem Standby-Modus im Wesentlichen lediglich zur Überführung in den Bereitschaftsmodus oder den Betriebsmodus, in dem Bereitschaftsmodus zur Durchführung einer Zuordnung des Aufstellgeräts 2 zu einer nicht dargestellten Kochstelle des Kochfelds und in dem Betriebsmodus für den Betrieb des Aufstellgeräts 2 und des Kochfelds in vollem Funktionsumfang ausgebildet sind. Entsprechend ist der jeweilige Berührungssensor 11, 12 jedes der Griffe 4 hier gleichzeitig als ein weiterer Eingabebereich zur Eingabe eines weiteren Benutzerbefehls zur Ansteuerung des Kochfelds ausgebildet, nämlich derart, dass das Aufstellgerät und das Kochfeld in Abhängigkeit der Detektion der Berührung des jeweiligen Griffs 4 mittels der Steuerung einschaltbar sind. Die Verwendung der Formulierungen "weiterer Eingabebereich" und weiteren Benutzerbefehls" dient einzig der Abgrenzung zu einem möglicherweise alternativ oder zusätzlich vorgesehenen Eingabebereich zur Eingabe von Benutzerbefehlen, was nachfolgend noch näher ausgeführt wird.

Nachfolgend sind die Funktionsweise des Aufstellgeräts und das erfindungsgemäße Verfahren gemäß dem vorliegenden ersten Ausführungsbeispiel anhand der Fig. 1 und 2 näher erläutert.

Um einen möglichst energiesparenden Betrieb des Aufstellgeräts 2 und des Kochfelds zu ermöglichen, ist es gemäß der obigen Ausführungen vorgesehen, dass in Abhängigkeit der mittels der Bewegungssensoren 11, 12 detektierten Berührung des jeweiligen Griffs 4 die Steuerung des Aufstellgeräts 2 und die Kochfeldsteuerung des Kochfelds von dem jeweiligen Standby-Modus in einen Bereitschaftsmodus oder einen Betriebsmodus überführt werden, wobei die Steuerung und Kochfeldsteuerung in dem Standby-Modus im Wesentlichen lediglich in den Bereitschaftsmodus oder den Betriebsmodus überführt werden, in dem Bereitschaftsmodus eine Zuordnung des Aufstellgeräts 2 zu einer der Kochstellen des Kochfelds durchführen und in dem Betriebsmodus das Aufstellgerät 2 und das Kochfeld in vollem Funktionsumfang betreiben. Entsprechend wird die Steuerung des Aufstellgeräts '2 und die Kochfeldsteuerung des Kochfelds von dem jeweiligen Standby-Modus in den jeweiligen Bereitschaftsmodus oder den jeweiligen Betriebsmodus überführt, sofern eine Berührung einer der Griffe 4 mittels der korrespondierenden Berührungssensoren 11, 12 detektiert worden ist. Beispielsweise wird das Aufstellgerät 2 und das Kochfeld in Abhängigkeit der Detektion der Berührung einer der beiden Griffe 4 mittels der Steuerung eingeschaltet.

Zusätzlich zu der Detektion einer Berührung eines der Griffe 4 durch den Benutzer werden die Berührungssensoren 11, 12 hier auch für mindestens eine weitere Funktion, nämlich zur Eingabe eines weiteren Benutzerbefehls verwendet. Beispielsweise ist es denkbar, dass mindestens einer des mindestens einen Berührungssensors 11, 12 zur Detektion einer Drehbewegung der menschlichen Hand 10 relativ zu dem jeweiligen Griff 4 ausgebildet ist, wobei in Abhängigkeit der Detektion der Drehbewegung der weitere Benutzerbefehl durch den Benutzer eingegeben wird. Bei dem vorliegenden Ausführungsbeispiel könnte beispielsweise der Benutzer zwecks Einstellung einer Leistungsstufe bei der vorgenannten Kochstelle des Kochfelds, auf der das Aufstellgerät 2 aufgestellt worden ist, mittels einer Drehung von dessen Hand 10 um eine Achse des Griffs 4, also durch eine Bewegung der Finger 14, 16, 18 relativ zu dem jeweils korrespondierenden Berührungssensor 11, 12, die Leistungsstufe für diese Kochstelle je nach Drehrichtung erhöhen oder erniedrigen können.

Zusätzlich kann es vorgesehen sein, dass mittels der Steuerung eine Leistung des Kochfelds automatisch reduziert wird, um so beispielsweise sensible Bauteile des Kochfelds, die aufgrund einer bei einer manuellen Bewegung des Aufstellgeräts 2 durch einen Benutzer auftretenden mechanischen Belastung in deren Funktion beeinträchtigt oder beschädigt werden könnten, wirksam zu schützen.

Wie oben bereits ausgeführt, wird mittels der Berührungssensoren 11, 12 beispielsweise ein Füllgewicht eines/einer in das Aufstellgerät 2 eingefüllten Garguts und/oder Flüssigkeit erkannt. Das Gargut und die Flüssigkeit sind in den Fig. 1 und 2 nicht dargestellt. Ferner wird mittels der Berührungssensoren 11, 12 ein das Aufstellgerät 2 handhabendes Individuum, also der konkrete Benutzer des Aufstellgeräts 2, erkannt. Denkbar ist aber auch, dass mittels der Berührungssensoren 11, 12 ein das Aufstellgerät 2 handhabendes Mitglied einer Personengruppe, beispielsweise ein Kind oder ein in dessen Fähigkeiten eingeschränkter Erwachsener, erkannt wird. Mittels der speziellen Ausbildung der Berührungssensoren 11, 12 ist der jeweilige Greifbereich 8 somit gleichzeitig als ein weiterer Eingabebereich zur Eingabe eines weiteren Benutzerbefehls zur Ansteuerung des Aufstellgeräts 2 und/oder des Kochfelds verwendbar, nämlich derart, dass beispielsweise eine Handhabungs-Interaktion des Benutzers mit dem Aufstellgerät 2 erkannt wird und/oder eine Kochfeldaktion gestartet und/oder eingestellt und/oder beendet wird.

Entsprechend der vorgenannten Ausführungen zu dem vorliegenden ersten Ausführungsbeispiel ist das Aufstellgerät 2 gemäß dem ersten Ausführungsbeispiel sehr vielfältig verwendbar. Auf Basis der mittels der Berührungssensoren 11, 12 gemessenen Kräfte ist es somit möglich, automatisch zu erkennen, wie weit das Aufstellgerät 2 mit einem Gargut und/oder einer Flüssigkeit gefüllt ist. Entsprechend lässt sich diese Information für die Durchführung einer Kochassistenz mittels eines Kochassistenzsystems nutzen und die Kochassistenz an die individuellen Anforderungen anpassen. Ferner können kritische Situationen beim Kochen oder Braten rechtzeitig erkannt oder vermieden werden. Darüber hinaus lassen sich Nutzeraktionen, also Interaktionen des Benutzers mit dem Aufstellgerät 2, zur Energieeinsparung und/oder zur Erhöhung der Sicherheit bei der Benutzung des Aufstellgeräts 2 und/oder des Kochfelds, auf dem das Aufstellgerät 2 aufgestellt wird, umsetzen.

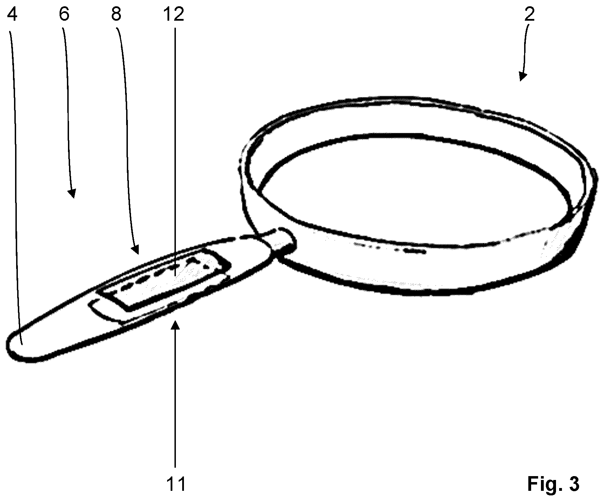

In der Fig. 3 ist ein zweites Ausführungsbeispiel des Aufstellgeräts dargestellt.

Das Aufstellgerät 2 des zweiten Ausführungsbeispiels ist als eine Pfanne ausgebildet und verfügt im Unterschied zu dem ersten Ausführungsbeispiel lediglich über einen einzigen Griff 4, nämlich einen Stangengriff. Ansonsten entspricht das zweite Ausführungsbeispiel dem ersten Ausführungsbeispiel gemäß der Fig. 1 und 2, so dass im Übrigen auf die obigen Ausführungen zu dem ersten Ausführungsbeispiel verwiesen wird.

Aufgrund der Ausbildung des Aufstellgeräts 2 zum Aufstellen auf das Kochfeld und des Verfahrens zum Betrieb des Aufstellgeräts 2 ist somit zum einen eine kostengünstige Benutzererkennung des das Aufstellgerät 2 benutzenden Benutzers ermöglicht. Zum anderen ist durch das Vorsehen des mindestens einen Berührungssensors 11, 12 in dem Greifabschnitt 6 zur Detektion einer Berührung des Griffs 4 durch den Benutzer zwecks manueller Bewegung des Aufstellgeräts 2 eine Greifabsicht des Benutzers des Aufstellgeräts 2 automatisch erkennbar. Ferner kann mittels des Aufstellgeräts 2 und des diesbezüglichen Verfahrens zu dessen Betrieb ein Füllgrad des Aufstellgeräts 2, also ein Füllgewicht eines in das Aufstellgerät 2 eingefüllten Garguts und/oder einer in das Aufstellgerät 2 eingefüllten Flüssigkeit ohne viel Aufwand abgeschätzt werden. Darüber hinaus ist es mittels des Aufstellgeräts 2 und des korrespondierenden Verfahrens möglich, ein Verhalten des Benutzers bei der Benutzung des Aufstellgeräts 2 zu ermitteln, so dass beispielsweise eine Interaktion des Benutzers mit dem Aufstellgerät 2 ohne zusätzliche Mittel bestimmbar ist. Auch kann hierdurch die Sicherheit bei der Benutzung des Aufstellgeräts 2 und des Kochfelds wesentlich verbessert werden, ohne dass dadurch der Bedienkomfort für den Benutzer des Aufstellgeräts 2 vermindert ist. Beispielsweise könnten Benutzerprofile für einzelne Benutzer in der Steuerung des Aufstellgeräts 2 hinterlegt sein, so dass bestimmte Benutzer oder Benutzergruppen, wie in ihren Fähigkeiten eingeschränkte Benutzer und/oder Kinder, das Aufstellgerät 2 und das Kochfeld lediglich in vorher festgelegten Grenzen nutzen können. Hierbei kann beispielsweise die Technik der sogenannten Künstlichen Intelligenz zum Einsatz kommen.

Das Aufstellgerät und das erfindungsgemäße Verfahren sind jedoch nicht auf die oben erläuterten Ausführungsbeispiele beschränkt.

Das Aufstellgerät kann auch als Wasserkocher, Bräter oder dergleichen ausgebildet sein. Entsprechend der Ausführungsform des Aufstellgeräts kann das Aufstellgerät über einen Griff oder mehrere Griffe verfügen, wobei die Ausbildung des Griffs bei lediglich einem der Griffe oder einer Mehrzahl der Griffe vorliegen kann. Das Aufstellgerät kann für ein induktives Kochfeld geeignet ausgebildet sein. Dies ist jedoch nicht zwingend erforderlich. Das Aufstellgerät kann für alle denkbaren Kochfeldtypen geeignet ausgebildet sein.

Der mindestens eine Berührungssensor ist nach Art, Funktionsweise, Dimensionierung, Material, Anzahl und Anordnung in weiten geeigneten Grenzen frei wählbar. Die vorgenannten Erläuterungen sind somit lediglich exemplarisch zu verstehen und nicht begrenzend. Je nach Anwendungsfall wird der Fachmann den mindestens einen Berührungssensor geeignet auswählen und beispielsweise voneinander verschiedene Sensortechnologien miteinander kombinieren.

Zusätzlich zu der Sendeeinheit kann das Aufstellgerät auch eine Empfangseinheit zwecks Signalübertragung von dem Kochfeld zu dem Aufstellgerät aufweisen. Denkbar ist auch, dass die Sendeeinheit des Aufstellgeräts als eine kombinierte Sende-/Empfangseinheit ausgebildet ist.

Im Unterschied zu den beiden erläuterten Ausführungsbeispielen kann es in anderen Ausführungsformen vorgesehen sein, dass das Aufstellgerät alternativ oder zusätzlich zu dem vorgenannten weiteren Eingabebereich mindestens eine mit der Steuerung signalübertragend verbundene Eingabeeinheit mit mindestens einem in dem Griff integrierten Eingabebereich zur Eingabe eines Benutzerbefehls durch den Benutzer des Aufstellgeräts aufweist, wobei der Eingabebereich in einem von dem Greifabschnitt positionsverschiedenen Eingabeabschnitt angeordnet ist und mittels des Benutzerbefehls das Aufstellgerät und/oder das Kochfeld ansteuerbar sind/ist. Auf diese Weise ist beispielsweise die Sicherheit bei der Bedienung des Aufstellgeräts und insbesondere die Sicherheit bei der Bedienung des Kochfelds wesentlich verbessert, ohne dass dadurch der Bedienkomfort für den Benutzer des Aufstellgeräts vermindert ist. Zum einen ist durch die klare räumliche Trennung des Griffs in einen Greifabschnitt und in den mindestens einen Eingabeabschnitt eine ungewollte Bedienung des mindestens einen Eingabebereichs der mindestens einen Eingabeeinheit bei einem Greifen des Griffs zur manuellen Bewegung des Aufstellgeräts wirksam entgegengewirkt. Bei dem Aufstellgerät ist somit eine Unterscheidung zwischen einer Bedienung des Griffs zum Zwecke der Eingabe eines Benutzerbefehls auf der einen Seite und einer Bedienung des Griffs zum Zwecke der manuellen Bewegung des Aufstellgeräts auf der anderen Seite ermöglicht. Der mindestens eine Eingabebereich kann dabei von außen sichtbar oder unsichtbar an dem Griff angeordnet sein. Beispielsweise kann der mindestens eine Eingabebereich in den Griff vollständig integriert sein, so dass dieser Eingabebereich von außen weder sichtbar noch fühlbar ist.

Eine vorteilhafte Weiterbildung der vorgenannten Ausführungsform des Aufstellgeräts sieht vor, dass in Abhängigkeit der Detektion des Ergreifens durch den Berührungssensor die Eingabe des Benutzerbefehls mittels der Steuerung sperrbar ist. Auf diese Weise ist der Schutz gegen eine Fehlbedienung des Aufstellgeräts weiter verbessert. Der Berührungssensor kann beispielsweise als ein kapazitiver Sensor ausgebildet sein.

## Patentansprüche

1. Verfahren zum Betrieb eines Aufstellgeräts (2) für ein Kochfeld, umfassend
mindestens einen Griff (4) mit einem Greifabschnitt (6) mit mindestens einem in dem Griff (4) integrierten Greifbereich (8) zum Ergreifen des Aufstellgeräts (2) mit einer Hand (10) eines Benutzers,
eine Steuerung, und
eine mit der Steuerung signalübertragend verbundene Sendeeinheit zur Signalübertragung von dem Aufstellgerät (2) zu dem Kochfeld,
wobei der Greifbereich (8) mindestens einen mit der Steuerung signalübertragend verbundenen Berührungssensor (11, 12) zur Detektion des Ergreifens des Griffs (4) aufweist,
wobei der Berührungssensor (11, 12) zur im Wesentlichen gleichzeitigen Detektion einer Kraft und einer Position mindestens eines Fingers (14, 16, 18) der Hand (10) ausgebildet ist,
wobei in Abhängigkeit eines Ausgangssignals des Berührungssensors (11, 12) eine mit der Steuerung signalübertragend verbundene Ausgabeeinheit des Aufstellgeräts und/oder die Sendeeinheit zur Ansteuerung des Kochfelds ansteuerbar sind/ist,
wobei mittels des mindestens einen Berührungssensors (11, 12) im Wesentlichen gleichzeitig eine Kraft und eine Position mindestens des einen Fingers (14, 16, 18) der Hand (10) detektiert wird, und
wobei in Abhängigkeit des Ausgangssignals des mindestens einen Berührungssensors (11, 12) die Ausgabeeinheit des Aufstellgeräts und/oder die Sendeeinheit zur Ansteuerung des Kochfelds angesteuert werden/wird
**dadurch gekennzeichnet, dass**
mittels des mindestens einen Berührungssensors (11, 12) ein Füllgewicht eines/einer in das Aufstellgerät (2) eingefüllten Garguts und/oder Flüssigkeit erkannt wird.

2. Verfahren zum Betrieb eines Aufstellgeräts (2) nach dem vorangehenden Anspruch, wobei der Berührungssensor (11, 12) derart an dem Griff angeordnet oder in den Griff (4) integriert ist, dass der Berührungssensor (11, 12) bei dem Ergreifen des Griffs (4) mit der Hand (10) mittels des mindestens einen Fingers (14, 16, 18) funktionssicher berührbar ist.

3. Verfahren zum Betrieb eines Aufstellgeräts (2) nach einem der vorangehenden Ansprüche, wobei mittels des mindestens einen Berührungssensors (11, 12) ein das Aufstellgerät (2) handhabendes Individuum und/oder ein das Aufstellgerät handhabendes Mitglied einer Personengruppe erkannt wird.

4. Verfahren zum Betrieb eines Aufstellgeräts (2) nach einem der vorangehenden Ansprüche, wobei der mindestens eine Berührungssensor (11, 12) gleichzeitig als ein weiterer Eingabebereich zur Eingabe eines weiteren Benutzerbefehls zur Ansteuerung des Aufstellgeräts und/oder des Kochfelds verwendet wird, bevorzugt, dass eine Handhabungs-Interaktion des Benutzers mit dem Aufstellgerät (2) erkannt wird und/oder eine Kochfeldaktion gestartet und/oder eingestellt und/oder beendet wird.

5. Verfahren zum Betrieb eines Aufstellgeräts (2) nach einem der vorangehenden Ansprüche, wobei der mindestens eine Berührungssensor (11, 12) mindestens als ein erster Berührungssensor (11) und ein zweiter Berührungssensor (12) ausgebildet ist, wobei bei auf dem Kochfeld aufgestellten Aufstellgerät (2) der erste Berührungssensor (11) auf der dem Kochfeld zugewandten Seite des Griffs (4) und der zweite Berührungssensor (12) auf der dem Kochfeld abgewandten Seite des Griffs (4) angeordnet ist.

6. Verfahren zum Betrieb eines Aufstellgeräts (2) nach einem der vorangehenden Ansprüche, wobei der Berührungssensor (11, 12) als eine berührungssensitive Folie ausgebildet ist.

7. Verfahren zum Betrieb eines Aufstellgeräts (2) nach einem der vorangehenden Ansprüche, wobei das Aufstellgerät mindestens eine mit der Steuerung signalübertragend verbundene Eingabeeinheit mit mindestens einem in dem Griff integrierten Eingabebereich zur Eingabe eines Benutzerbefehls durch den Benutzer des Aufstellgeräts aufweist, wobei der Eingabebereich in einem von dem Greifabschnitt positionsverschiedenen Eingabeabschnitt angeordnet ist und mittels des Benutzerbefehls das Aufstellgerät und/oder das Kochfeld ansteuerbar sind/ist.

8. Verfahren zum Betrieb eines Aufstellgeräts (2) nach dem vorangehenden Anspruch, wobei in Abhängigkeit der Detektion des Ergreifens durch den Berührungssensor die Eingabe des Benutzerbefehls mittels der Steuerung sperrbar ist.

9. Verfahren zum Betrieb eines Aufstellgeräts (2) nach einem der vorangehenden Ansprüche, wobei in Abhängigkeit der mittels des Berührungssensors (11, 12) detektierten Berührung des Griffs (4) die Steuerung des Aufstellgeräts (2) und/oder eine Kochfeldsteuerung des Kochfelds von einem Standby-Modus in einen Bereitschaftsmodus oder einen Betriebsmodus überführbar ist, wobei die Steuerung und/oder Kochfeldsteuerung in dem Standby-Modus im Wesentlichen lediglich zur Überführung in den Bereitschaftsmodus oder den Betriebsmodus, in dem Bereitschaftsmodus zur Durchführung einer Zuordnung des Aufstellgeräts (2) zu einer Kochstelle des Kochfelds und in dem Betriebsmodus für den Betrieb des Aufstellgeräts (2) und/oder des Kochfelds in vollem Funktionsumfang ausgebildet sind/ist.

10. Verfahren zum Betrieb eines Aufstellgeräts (2) nach einem der vorangehenden Ansprüche, wobei dass der Berührungssensor (11, 12) gleichzeitig als ein weiterer Eingabebereich zur Eingabe eines weiteren Benutzerbefehls zur Ansteuerung des Aufstellgeräts und/oder des Kochfelds ausgebildet ist, bevorzugt, dass das Aufstellgerät und/oder das Kochfeld in Abhängigkeit der Detektion der Berührung des Griffs (4) mittels der Steuerung einschaltbar sind/ist.

## Claims

1. Method for operating a positioning device (2) for a hob, comprising
at least one handle (4) having a gripping portion (6) with at least one gripping region (8) integrated into the handle (4) for grasping the positioning device (2) by a hand (10) of a user,
a control means, and
a transmitter unit signal-transmittingly connected to the control means for transmitting signals from the positioning device (2) to the hob,
the gripping region (8) having at least one touch sensor (11, 12) signal-transmittingly connected to the control means for detecting the handle (4) being grasped,
the touch sensor (11, 12) being designed to substantially simultaneously detect a force and a position of at least one finger (14, 16, 18) of the hand (10),
it being possible, in order to control the hob, depending on an output signal of the touch sensor (11, 12), to control an output unit of the positioning device signal-transmittingly connected to the control means and/or to control the transmitter unit,
a force and a position of at least one finger (14, 16, 18) of the hand (10) being detected substantially simultaneously by the at least one touch sensor (11, 12), and,
depending on the output signal of the at least one touch sensor (11, 12), the output unit of the positioning device and/or the transmitter unit being controlled in order to control the hob,
**characterised in that**
a filling weight of an item to be cooked and/or liquid poured into the positioning device (2) is detected by the at least one touch sensor (11, 12).

2. Method for operating a positioning device (2) according to the preceding claim, wherein the touch sensor (11, 12) is arranged on the handle or integrated into the handle (4) in such a way that the touch sensor (11, 12) can be functionally-reliably touched by at least one finger (14, 16, 18) when the handle (4) is grasped by the hand (10).

3. Method for operating a positioning device (2) according to any of the preceding claims, wherein an individual who is handling the positioning device (2) and/or a member of a group of persons who is handling the positioning device is detected by the at least one touch sensor (11, 12).

4. Method for operating a positioning device (2) according to any of the preceding claims, wherein the at least one touch sensor (11, 12) is simultaneously used as a further input region for inputting a further user command for controlling the positioning device and/or the hob, preferably that a handling interaction of the user with the positioning device (2) is detected and/or a hob action is started and/or set and/or ended.

5. Method for operating a positioning device (2) according to any of the preceding claims, wherein the at least one touch sensor (11, 12) is designed at least as a first touch sensor (11) and a second touch sensor (12), wherein, when a positioning device (2) is positioned on the hob, the first touch sensor (11) is arranged on the side of the handle (4) facing the hob and the second touch sensor (12) is arranged on the side of the handle (4) facing away from the hob.

6. Method for operating a positioning device (2) according to any of the preceding claims, wherein the touch sensor (11, 12) is in the form of a touch-sensitive film.

7. Method for operating a positioning device (2) according to any of the preceding claims, wherein the positioning device comprises at least one input unit, which is signal-transmittingly connected to the control means and has at least one input region integrated in the handle for inputting a user command by the user of the positioning device, wherein the input region is arranged in an input portion that is positionally different from the gripping portion, and the positioning device and/or the hob can be controlled by the user command.

8. Method for operating a positioning device (2) according to the preceding claim, wherein, depending on the detection of the grasping by the touch sensor, the input of the user command can be blocked by the control means.

9. Method for operating a positioning device (2) according to any of the preceding claims, wherein, depending on the touching of the handle (4) detected by the touch sensor (11, 12), the control means of the positioning device (2) and/or a hob control means of the hob can be transferred from a standby mode to a ready mode or an operating mode, wherein, in the standby mode, the control means and/or hob control means are/is substantially designed only to transfer to the ready mode or to the operating mode, to assign the positioning device (2) to a hot plate of the hob in the ready mode, and to operate the positioning device (2) and/or the hob in its full functionality in the operating mode.

10. Method for operating a positioning device (2) according to any of the preceding claims, wherein the touch sensor (11, 12) is simultaneously designed as a further input region for inputting a further user command for controlling the positioning device and/or the hob, preferably that the positioning device and/or the hob can be switched on depending on the detection of the touching of the handle (4) by the control means.

## Revendications

1. Procédé permettant de faire fonctionner un appareil à poser (2) pour une plaque de cuisson, comprenant
au moins une poignée (4) comportant une section de préhension (6) comportant au moins une zone de préhension (8) intégrée dans la poignée (4) pour la saisie de l'appareil à poser (2) avec une main (10) d'un utilisateur,
un dispositif de commande, et
une unité d'émission connectée par transmission de signaux au dispositif de commande pour la transmission de signaux de l'appareil à poser (2) à la plaque de cuisson,
dans lequel la zone de préhension (8) présente au moins un capteur de toucher (11, 12) connecté par transmission de signaux au dispositif de commande pour la détection de la saisie de la poignée (4),
dans lequel le capteur de toucher (11, 12) est configuré pour détecter sensiblement simultanément une force et une position d'au moins un doigt (14, 16, 18) de la main (10),
dans lequel, en fonction d'un signal de sortie du capteur de toucher (11, 12), une unité de sortie de l'appareil à poser connectée par transmission de signaux au dispositif de commande et/ou l'unité d'émission peuvent être commandées pour la commande de la plaque de cuisson,
dans lequel, au moyen de l'au moins un capteur de toucher (11, 12), une force et une position d'au moins un doigt (14, 16, 18) de la main (10) sont détectées sensiblement simultanément, et
dans lequel, en fonction du signal de sortie de l'au moins un capteur de toucher (11, 12), l'unité de sortie de l'appareil à poser et/ou l'unité d'émission peuvent être commandées pour la commande de la plaque de cuisson
**caractérisé en ce que**
un poids de remplissage d'un produit à cuire et/ou d'un liquide introduits dans l'appareil à poser (2) est détecté au moyen de l'au moins un capteur de toucher (11, 12).

2. Procédé permettant de faire fonctionner un appareil à poser (2) selon la revendication précédente, dans lequel le capteur de toucher (11, 12) est disposé sur la poignée ou est intégré dans la poignée (4) de telle sorte que le capteur de toucher (11, 12) peut être touché de manière fiable lors de la saisie de la poignée (4) avec la main (10) au moyen d'au moins un doigt (14, 16, 18).

3. Procédé permettant de faire fonctionner un appareil à poser (2) selon l'une des revendications précédentes, dans lequel un individu manipulant l'appareil à poser (2) et/ou un membre d'un groupe de personnes manipulant l'appareil à poser sont reconnus au moyen de l'au moins un capteur de toucher (11, 12).

4. Procédé permettant de faire fonctionner un appareil à poser (2) selon l'une des revendications précédentes, dans lequel l'au moins un capteur de toucher (11, 12) est utilisé simultanément comme une autre zone d'entrée pour l'entrée d'un autre ordre utilisateur pour la commande de l'appareil à poser et/ou de la plaque de cuisson, de préférence en ce qu'une interaction de manipulation de l'utilisateur avec l'appareil à poser (2) est détectée et/ou une action de plaque de cuisson est démarrée et/ou réglée et/ou terminée.

5. Procédé permettant de faire fonctionner un appareil à poser (2) selon l'une des revendications précédentes, dans lequel l'au moins un capteur de toucher (11, 12) est réalisé au moins sous forme de premier capteur de toucher (11) et de second capteur de toucher (12), dans lequel, lorsque l'appareil à poser (2) est posé sur la plaque de cuisson, le premier capteur de toucher (11) est disposé sur le côté de la poignée (4) tourné vers la plaque de cuisson et le second capteur de toucher (12) est disposé sur le côté de la poignée (4) opposé à la plaque de cuisson.

6. Procédé permettant de faire fonctionner un appareil à poser (2) selon l'une des revendications précédentes, dans lequel le capteur de toucher (11, 12) est réalisé sous forme de film sensible au toucher.

7. Procédé permettant de faire fonctionner un appareil à poser (2) selon l'une des revendications précédentes, dans lequel l'appareil à poser présente au moins une unité d'entrée connectée par transmission de signaux au dispositif de commande avec au moins une zone d'entrée intégrée dans la poignée pour l'entrée d'un ordre utilisateur par l'utilisateur de l'appareil à poser, dans lequel la zone d'entrée est disposée dans une section d'entrée dont la position est différente de celle de la section de préhension et l'appareil à poser et/ou la plaque de cuisson peuvent être commandés au moyen de l'ordre utilisateur.

8. Procédé permettant de faire fonctionner un appareil à poser (2) selon la revendication précédente, dans lequel, en fonction de la détection de la saisie par le capteur de toucher, l'entrée de l'ordre utilisateur peut être bloquée au moyen du dispositif de commande.

9. Procédé permettant de faire fonctionner un appareil à poser (2) selon l'une des revendications précédentes, dans lequel, en fonction du toucher de la poignée (4) détecté au moyen du capteur de toucher (11, 12), le dispositif de commande de l'appareil à poser (2) et/ou un dispositif de commande de plaque de cuisson de la plaque de cuisson peuvent être transférés d'un mode veille à un mode d'attente ou à un mode de fonctionnement, dans lequel le dispositif de commande et/ou le dispositif de commande de plaque de cuisson sont configurés, dans le mode veille, sensiblement uniquement pour le transfert en mode d'attente ou en mode de fonctionnement, dans le mode d'attente, pour effectuer une attribution de l'appareil à poser (2) à un emplacement de cuisson de la plaque de cuisson et, dans le mode de fonctionnement, pour le fonctionnement de l'appareil à poser (2) et/ou de la plaque de cuisson de manière pleinement opérationnelle.

10. Procédé permettant de faire fonctionner un appareil à poser (2) selon l'une des revendications précédentes, dans lequel le capteur de toucher (11, 12) est réalisé simultanément sous forme d'autre zone d'entrée pour l'entrée d'un autre ordre utilisateur pour la commande de l'appareil à poser et/ou de la plaque de cuisson, de préférence en ce que l'appareil à poser et/ou la plaque de cuisson peuvent être mis en circuit en fonction de la détection du toucher de la poignée (4) au moyen du dispositif de commande.
